# EUROPEAN PATENT SPECIFICATION

(11) **EP 2 086 686 B1**
(45) Date of publication and mention of the grant of the patent: **16.05.2012**
(21) Application number: 06807060.6
(22) Date of filing: 06.10.2006
(51) Int. Cl.: B03B 9/00, B09B 3/00, C10L 5/40

(54) **RENEWABLE ENERGY RECOVERY FROM MSW AND OTHER WASTES**
RÜCKGEWINNUNG ERNEUERBARER ENERGIE AUS SIEDLUNGS- UND ANDEREN ABFÄLLEN
RÉCUPÉRATION D'ÉNERGIE RENOUVELABLE À PARTIR DE DÉCHETS URBAINS SOLIDES ET AUTRES DÉCHETS

(43) Date of publication of application: 12.08.2009
(73) Proprietor: BioEnergy Technology Company Limited, Dublin 18 (IE)
(72) Inventor: O'Kane, Pearse, Dublin 18 (IE)
(74) Representative: Schütte, Gearoid
(86) International application number: PCT/EP2006/067164
(87) International publication number: WO 2008/040396

(56) References cited:
- EP-A1- 0 706 839
- WO-A-2004/060587
- WO-A-2006/059316

## Description

### Introduction

This invention relates to the recovery of renewable energy from waste material such as Municipal Solid Waste (MSW) and other wastes, including commercial and sludge wastes.

### Description of the prior art

One long established method of handling MSW is to simply dump the waste at designated landfill sites. However, there is an ever increasing volume of MSW being generated and such landfill sites are becoming more limited. Further, waste disposed of in this manner has a negative environmental impact and presents a pollution hazard.

It is also well known to dispose of MSW and other wastes by incineration. Heat generated by combustion of the waste in the incinerator is used to generate steam which drives a steam turbine which in turn drives an electrical generator. However, whilst incineration reduces the landfill requirement it also presents environmental problems such as toxic emissions produced during the combustion process.

It is further known, for example as disclosed in US6,032,467, to coarsely chop-up the municipal solid waste and deliver the coarsely chopped MSW through a gasifier to generate a fuel gas which may, for example, be used to power a gas turbine. However, a problem with these methods is the widely variable calorific value of the waste material due to the heterogeneous nature of the MSW. To overcome this problem it is proposed in US6,032,467 to add high-grade coal to the waste to adjust the calorific value of the waste. However, this is not ideal, and one has the problems associated with trying to maintain a substantially even calorific value throughout processing by controlled addition and mixing of the coal with the waste.

WO2004/060587 discloses a method for processing solid organic waste to produce a fuel by treating the waste by anaerobic digestion and subsequently treating the treated waste in a pyrolysis process.

In our earlier filed application-Publication No. W02006/059316 we have disclosed a system for generating energy from MSW.

It is an object of the present invention to provide an improved process and apparatus for the efficient extraction and recovery of renewable energy from MSW.

### Summary of the invention

According to the invention there is provided a process for extracting renewable energy from waste material such as MSW and the like which comprises a mixture of organic and inorganic waste materials including:
delivering raw waste material into an organic material digester;
treating the raw waste material in the organic material digester for converting an organic fraction of the raw waste material into a solid bio fuel material which is mixed with an inert inorganic waste material fraction of the raw waste material;
discharging treated material from the organic material digester and delivering said treated material to a separator;
separating the inert inorganic waste material from the solid bio fuel material in the separator and separately discharging the inorganic material and a substantially homogenous solid bio fuel material from the separator;
downstream of the separator delivering the homogenous solid bio fuel material through a dryer for reducing the moisture content of the homogenous solid bio fuel material;
after drying subjecting the homogenous solid bio fuel material to heat treatment for extracting a fuel gas from said homogenous solid bio fuel material ;
the process including heating the homogeneous solid bio fuel material in an oxygen depleted atmosphere for extracting the fuel gas from the homogeneous solid bio fuel material.

The heat treatment can be by gasification, pyrolysis, or other forms of heat treatment.

The fuel gas may be used to generate energy in a gas turbine, to drive a gas powered engine or to generate liquid bio fuels.

In one embodiment the process includes recirculating heat generated during heat treatment of the homogenous solid bio fuel material through the dryer for drying the homogenous solid bio fuel material prior to heat treatment of the homogenous solid bio fuel material.

In another embodiment the process includes using the fuel gas to generate energy in a gas powered engine. The gas powered engine may, for example, be provided by a gas turbine.

In a further embodiment the process includes liquefying the fuel gas to produce a liquid bio fuel.

In another embodiment the process includes screening the solid bio fuel material for extracting any particles sized greater than 25 mm.

In another embodiment the process includes delivering exhaust gas discharged from the gas powered engine through a steam generator for generating steam.

In a further embodiment the process includes delivering the steam to a steam turbine for driving the steam turbine, the steam turbine driving an electrical generator for generating electrical power.

In another embodiment the process includes cleaning the fuel gas.

In another embodiment the process includes collecting condensate during fuel gas production and delivering the condensate through a treatment plant to remove impurities.

In a further embodiment the process includes passing the homogenous solid bio fuel material through a destoning apparatus upstream of the dryer.

In another embodiment the process includes baling the inert inorganic material discharged from the separator.

In another embodiment the process includes feeding the inert inorganic material discharged from the separator through gasification, pyrolysis or other forms of heat treatment for energy recovery.

In another embodiment the process includes extracting metal material from the inert inorganic material discharged from the separator.

In another aspect the invention provides a system for extracting renewable energy from waste material such as MSW and the like, including:
an organic material digester having an inlet for charging the digester with waste material and a treated material outlet, said digester being operable to convert an organic fraction of waste material delivered into the digester into a solid bio fuel material;
a separator having means for separating the solid bio fuel material from an inert inorganic fraction of treated material discharged from the digester;
a dryer for drying the solid bio fuel material discharged from the separator;
heat treatment apparatus having means for heat treatment of the solid bio fuel material for generating a fuel gas from said solid bio fuel material, and
the heat treatment apparatus having means for heating the solid bio fuel material in an oxygen depleted atmosphere for extracting the fuel gas from the solid bio fuel material.

In another embodiment means is provided for recirculating heat generated in the heat treatment apparatus through the dryer for drying the solid bio fuel material.

In another embodiment the apparatus further includes a gas powered engine and means for supplying the fuel gas to said gas powered engine.

In another embodiment the gas powered engine is drivably connected to an electrical generator.

In another embodiment the system includes a sleam generator and means for delivering exhaust gases from the gas powered engine through the sleam generator.

In another embodiment the system includes a steam turbine connected to the steam generator for reception of steam therefrom to drive the steam turbine.

In another embodiment the steam turbine is drivably connected to an electrical generator.

In a further embodiment the system includes a cleaner for cleaning the fuel gas generated in the heat treatment apparatus.

In another embodiment the system includes means for liquefying the fuel gas to produce a liquid bio fuel.

In another embodiment the system includes means for heat treatment of the inorganic waste material discharged from the separator for generating energy from the inorganic waste material.

### Brief description of the drawings

The invention will be more clearly understood from the following description of some embodiments thereof, given by way of example only, with reference to the accompanying drawings, in which:

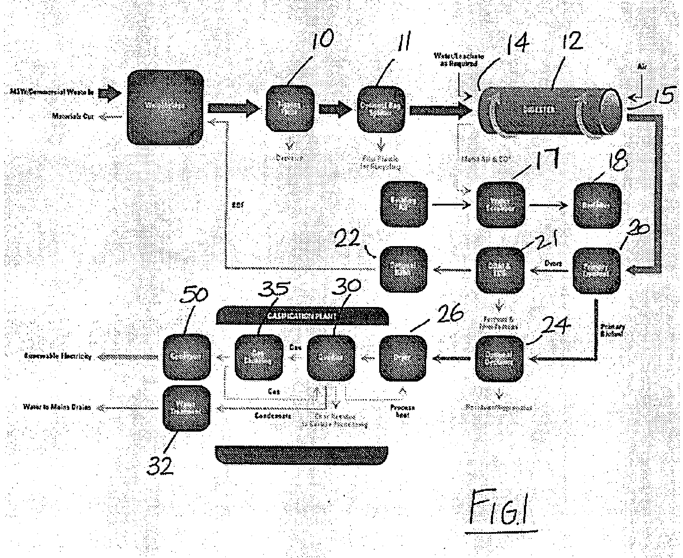

Fig. 1 is a schematic illustration of a process for extracting renewable energy from MSW according to the invention;

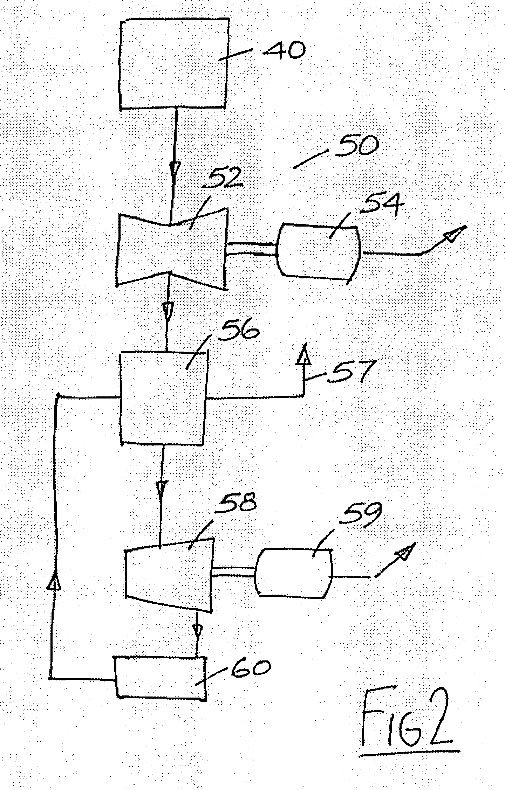

Fig. 2 is a schematic illustration of a renewable energy generating plant used in the process; and

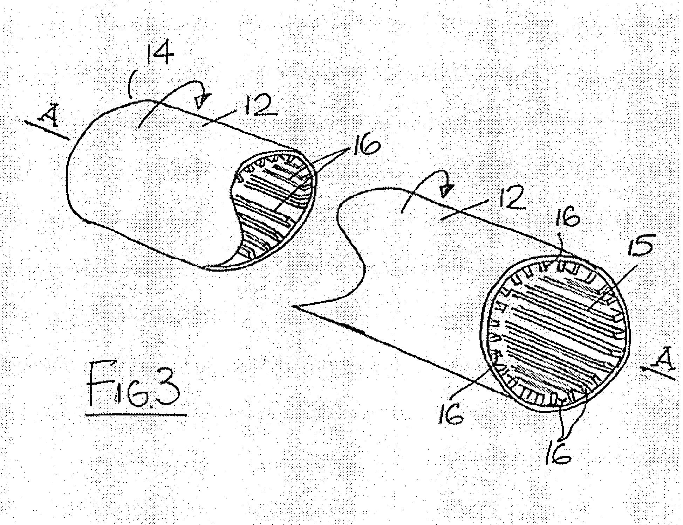

Fig. 3 is a schematic perspective view of a rotary organic digester used the process.

### Detailed description of preferred embodiments

Referring to the drawings MSW is delivered onto a tipping floor 10 which has sufficient storage space for up to two days of waste collection. Any oversized items are removed from the MSW at this stage.

The MSW is then delivered into a rotary organic digester 12. The MSW may optionally be passed through a bag splitter 11 for removal of plastic film material prior to delivery to the digester 12.

The digester 12 is essentially an elongate cylindrical steel drum 12 which is rotated about a central axis A of the drum 12 which is generally horizontal with a small downward till between an inlet end 14 and an outlet end 15 of the drum 12. An inner wall surface of the drum 12 is provided with a series of ribs 16 extending between opposite ends 14, 15 of the drum 12 parallel to the drum central axis A and mounted spaced-apart around an entire inside circumference of the drum 12. These ribs 16 protect the drum 12 side wall and contain inoculant material between the ribs 16. Baffles may optionally be provided within the drum 12 to help regulate the flow of material through the drum 12. Other suitable digesters are described in WO2006/O59316, US5, 047, 349 and US 5,407, 809 for example.

As the MSW passes through the drum 12, typically over a period of about 2 days, an organic fraction of the MSW is broken down by a combination of aerobic microbial activity and mechanical activity as the waste tumbles through the drum 12 between the inlet 14 and outlet 15 of the digester drum 12. During treatment air is delivered through the drum 12 and moist air and carbon dioxide generated within the drum are extracted and delivered through a water scrubber 17 and biofilter 18. The organic fraction of the MSW is converted in the drum 12 into a solid bio fuel material. Treated waste material comprising a mixture of the solid bio fuel material and inert inorganic waste material is discharged from the outlet 15 of the digester drum 12.

This treated material is then fed to a separator 20 for separating the inert inorganic waste material from the solid bio fuel material. The inert inorganic waste material discharged from the separator 20 may optionally be delivered through a baler 22 and transported away for further processing or recycling. Prior to baling metals may be recovered in a metal extractor 21. A substantially homogenous solid bio fuel material is separately discharged from the separator 20. This material has a typical particle size of less than 5mm and moisture content of 45% - 55%.

The homogeneous solid bio fuel material is optionally passed through a destoner 24 and into a dryer 26. Within the dryer 26 the moisture contend of the homogenous solid bio fuel material is reduced. At the inlet the moisture content may be as high as 70%, however more typically the moisture content will be in the order of 45% - 55% and generally will be about 48%.

The homogenous solid bio fuel material wich has been dried is then delivered to a gasifier 30. Within the gasifier 30, the homogenous solid bio fuel material is heated in an oxygen depleted atmosphere. This prevents the formation of pollulants such as dioxins and furans associated with conventional combustion. Gasification of the homogeneous solid bio fuel material is initiated in the gasifier 30 when it is healed to about 450 °C (about 842 °F) at which point exothermic reactions provide sufficient heat to drive the temperature higher and sustain the reactions. During normal operation the heat required to initiate the gasification process is derived from gas generated and stored during previous operation. The heating of the homogenous solid bio fuel material in the depleted oxygen atmosphere generates a bio fuel gas rich in methane, hydrogen and carbon monoxide. The gasification process of the invention produces a fuel gas with a minimum of liquids, solids and minimal pollution. The by-products are a small char residue, and if the material used is moist water will also be produced which can be treated 32 before disposal.

Bio fuel gases are passed through a cleaner 35 which includes a particle remover to ensure a clean stream of biogas 6 fuel. The cleaned biogas is then cooled to remove water and any liquid fuels from it. Clean bio fuel gas is then delivered to a pressurised storage tank 40.

The bio fuel gases are then converted into electrical energy in a power plant indicated generally by the reference numeral 50. Bio fuel gas is delivered from the storage tank 40 to a gas turbine 52. Energy extracted from the bio fuel gas drives the gas turbine which in turn drives an electrical generator 54 for generating electrical power Energy extraction from the bio fuel gas within the gas turbine 52 occurs at such high temperatures, typically greater than 1300 °C (2,400 °F) that any traces of dioxins and furans are completely destroyed.

Exhaust gases from the gas turbine 52 are delivered through a steam generator 56 before discharge through a flue 57. Heat recovered from the exhaust gases in the steam generator 56 is used for the generation of steam which is delivered through a steam turbine 58 which in turn drives another electrical generator 59 for further generation of electrical power. Steam discharged from the turbine 58 is delivered through a condenser 60 within which it is condensed into feed water which is returned through the steam generator 56.

It will be appreciated that depending on the composition of the MSW, relatively high amounts of clean energy can be produced from the bio fuel gas or the gas can be liquefied to produce bio fuels, such as bio-ethanol and/or bio-diesel.

It will also be appreciated that the process of the invention provides an efficient process for the conversion of MSW and other wastes into renewable energy. Waste handling is simplified by feeding the MSW directly through the organic digester. A substantially homogeneous solid bio fuel material is extracted from the treated waste discharged from the digester for delivery through the gasifier.

The invention is not limited to the embodiments hereinbefore described which may be varied in both construction and detail within the scope of the appended claims

## Claims

1. A process for extracting renewable energy from waste material such as MSW and the like which comprises a mixture of organic and inorganic waste materials including:
delivering raw waste material into an organic material digester;
treating the raw waste material in the organic material digester for converting an organic fraction of the raw waste material into a solid bio fuel material which is mixed with an inert inorganic waste material fraction of the raw waste material;
discharging treated material from the organic material digester and delivering said treated material to a separator;
separating the inert inorganic waste material from the solid bio fuel material in the separator and separately discharging the inorganic material and a substantially homogenous solid bio fuel material from the separator;
downstream of the separator delivering the homogenous solid bio fuel material through a dryer for reducing the moisture content of the homogenous solid bio fuel material;
after drying subjecting the homogenous solid bio fuel material to heat treatment for extracting a fuel gas from said homogenous solid bio fuel material,
the process including heating the homogeneous solid bio fuel material in an oxygen depleted atmosphere for extracting the fuel gas from the homogeneous solid bio fuel material.

2. A process as claimed in claim 1 wherein the process includes recirculating heat generated during heat treatment of the homogenous solid bio fuel material through the dryer for drying the homogenous solid bio fuel material prior to heat treatment of the homogenous solid bio fuel material.

3. A process as claimed in any preceding claim wherein the process includes using the fuel gas to generate energy in a gas powered engine.

4. A process as claimed in claim 1 or 2 wherein the process includes liquefying the fuel gas to produce a liquid bio fuel.

5. A process as claimed in any preceding claim wherein the process includes screening the solid bio fuel material for extracting any particles sized greater than 25 mm.

6. A process as claimed in any preceding claim wherein the process includes delivering exhaust gas discharged from the gas powered engine through a steam generator for generating steam, and delivering the steam to a steam turbine for driving the steam turbine, the steam turbine driving an electrical generator for generating electrical power.

7. A process as claimed in any preceding claim wherein the process includes cleaning the fuel gas.

8. A process as claimed in any preceding claim wherein the process includes collecting condensate during fuel gas production and delivering the condensate through a treatment plant to remove impurities.

9. A system for extracting renewable energy from waste material such as MSW and the like, including:
an organic material digester having an inlet for charging the digester with waste material and a treated material outlet, said digester being operable to convert an organic fraction of waste material delivered into the digester into a solid bio fuel material;
a separator having means for separating the solid bio fuel material from an inert inorganic fraction of treated material discharged from the digester;
a dryer for drying the solid bio fuel material discharged from the separator;
heat treatment apparatus having means for heat treatment of the solid bio fuel material for generating a fuel gas from said solid bio fuel material; and
the heat treatment apparatus having means for heating the solid bio fuel material in an oxygen depleted atmosphere for extracting the fuel gas from the solid bio fuel material.

10. A system as claimed in claim 9 wherein means is provided for recirculating heat generated in the heat treatment apparatus through the dryer for drying the solid bio fuel material.

11. A system as claimed in claim 9 or 10 wherein the apparatus further includes a gas powered engine and means for supplying the fuel gas to said gas powered engine, the gas powered engine is drivably connected to an electrical generator, a steam generator and means for delivering exhaust gases from the gas powered engine through the steam generator, a steam turbine connected to the steam generator for reception of steam therefrom to drive the steam turbine, the steam turbine being drivably connected to an electrical generator.

12. A system as claimed in any of claims 9 to 11 wherein the system includes a cleaner for cleaning the fuel gas generated in the heat treatment apparatus.

13. A system as claimed in any of claims 9 to 12 wherein the system includes means for liquefying the fuel gas to produce a liquid bio fuel.

## Patentansprüche

1. Verfahren zum Ausziehen erneuerbarer Energie aus ein Gemisch aus organischen und anorganischen Abfallmaterialien umfassendem Abfallmaterial, wie etwa festem Siedlungsabfall und dergleichen, umfassend:
Zuführen von Rohabfallmaterial in einen Faulbehälter für organisches Material;
Behandeln des Rohabfallmaterials in dem Faulbehälter für organisches Material, um eine organische Fraktion des Rohabfallmaterials in ein festes Biobrennstoffmaterial umzuwandeln, das mit einer inerten anorganischen Abfallmaterialfraktion des Rohabfallmaterials gemischt wird;
Ablassen von behandeltem Material aus dem Faulbehälter für organisches Material und Zuführen des genannten behandelten Materials an eine Trennvorrichtung;
Trennen des inerten anorganischen Abfallmaterials von dem festen Biobrennstoffmaterial in der Trennvorrichtung und getrenntes Ablassen des anorganischen Materials und eines im Wesentlichen homogenen festen Biobrennstoffmaterials aus der Trennvorrichtung;
Zuführen, stromabwärts von der Trennvorrichtung, des homogenen festen Biobrennstoffmaterials durch einen Trockner zum Reduzieren des Feuchtigkeitsgehaltes des homogenen festen Biobrennstoffmaterials;
Nach dem Trocknen, Unterziehen des homogenen festen Biobrennstoffmaterials einer Wärmebehandlung zum Ausziehen eines Brenngases aus dem genannten homogenen festen Biobrennstoffmaterial, wobei das Verfahren das Erwärmen des homogenen festen Biobrennstoffmaterials in einer sauerstoffarmen Atmosphäre umfasst, um das Brenngas aus dem homogenen festen Biobrennstoffmaterial auszuziehen.

2. Verfahren nach Anspruch 1, wobei das Verfahren das Rezirkulieren von während der Wärmebehandlung des homogenen festen Biobrennstoffmaterials erzeugter Wärme durch den Trockner zum Trocknen des homogenen festen Biobrennstoffmaterials vor der Wärmebehandlung des homogenen festen Biobrennstoffmaterials umfasst.

3. Verfahren nach einem der vorangehenden Ansprüche, wobei das Verfahren das Verwenden des Brenngases zum Erzeugen von Energie in einer gasbetriebenen Kraftmaschine umfasst.

4. Verfahren nach einem der Ansprüche 1 oder 2, wobei das Verfahren das Verflüssigen des Brenngases umfasst, um einen flüssigen Biobrennstoff zu erzeugen.

5. Verfahren nach einem der vorangehenden Ansprüche, wobei das Verfahren das Sieben des festen Biobrennstoffmaterials umfasst, um Partikel von mehr als 25 mm Größe auszuziehen.

6. Verfahren nach einem der vorangehenden Ansprüche, wobei das Verfahren das Zuführen von aus der gasbetriebenen Kraftmaschine abgelassenem Abgas durch einen Dampferzeuger zum Erzeugen von Dampf und das Zuführen des Dampfs an eine Dampfturbine zum Antreiben der Dampfturbine umfasst, wobei die Dampfturbine einen elektrischen Stromerzeuger zum Erzeugen von elektrischer Leistung antreibt.

7. Verfahren nach einem der vorangehenden Ansprüche, wobei das Verfahren das Reinigen des Brenngases umfasst.

8. Verfahren nach einem der vorangehenden Ansprüche, wobei das Verfahren das Sammeln von Kondensat während der Brenngasherstellung und das Zuführen des Kondensats durch eine Behandlungsanlage zum Entfernen von Verunreinigungen umfasst.

9. System zum Ausziehen erneuerbarer Energie aus Abfallmaterial, wie etwa festem Siedlungsabfall und dergleichen, das Folgendes umfasst:
einen Faulbehälter für organisches Material mit einem Einlass zum Füllen des Faulbehälters mit Abfallmaterial und einem Auslass für behandeltes Material,
wobei der genannte Faulbehälter wirksam ist, eine organische Fraktion von in den Faulbehälter zugeführtem Abfallmaterial in ein festes Biobrennstoffmaterial umzuwandeln;
eine Trennvorrichtung mit Mitteln zum Trennen des festen Biobrennstoffmaterials von einer inerten anorganischen Fraktion von aus dem Faulbehälter abgelassenem behandeltem Material;
einen Trockner zum Trocknen des aus der Trennvorrichtung abgelassenen festen Biobrennstoffmaterials;
eine Wärmebehandlungsvorrichtung mit Mitteln für die Wärmebehandlung des festen Biobrennstoffmaterials zum Erzeugen eines Brenngases aus dem genannten festen Biobrennstoffmaterial; und
wobei die Wärmebehandlungsvorrichtung Mittel zum Erwärmen des festen Biobrennstoffmaterials in einer sauerstoffarmen Atmosphäre aufweist, um das Brenngas aus dem festen Biobrennstoffmaterial auszuziehen.

10. System nach Anspruch 9, wobei Mittel vorgesehen sind, um in der Wärmebehandlungsvorrichtung erzeugte Wärme durch den Trockner zum Trocknen des festen Biokraftstoffmaterials zu rezirkulieren.

11. System nach Anspruch 9 oder 10, wobei die Vorrichtung weiter eine gasbetriebene Kraftmaschine und Mittel zum Liefern des Brenngases an die genannte gasbetriebene Kraftmaschine, wobei die gasbetriebene Kraftmaschine antreibbar mit einem elektrischen Stromerzeuger verbunden ist, einen Dampferzeuger und Mittel zum Zuführen von Abgasen von der gasbetriebenen Kraftmaschine durch den Dampferzeuger umfasst, wobei eine Dampfturbine mit dem Dampferzeuger verbunden ist, um Dampf davon zu empfangen, um die Dampfturbine anzutreiben, wobei die Dampfturbine antreibbar mit einem elektrischen Stromerzeuger verbunden ist.

12. System nach einem der Ansprüche 9 bis 11, wobei das System eine Reinigungsvorrichtung zum Reinigen des in der Wärmebehandlungsvorrichtung erzeugten Brenngases umfasst.

13. System nach einem der Ansprüche 9 bis 12, wobei das System Mittel zum Verflüssigen des Brenngases umfasst, um einen flüssigen Biobrennstoff zu erzeugen.

## Revendications

1. Procédé destiné à extraire de l'énergie renouvelable à partir de déchets tels que les résidus urbains solides et autres du même genre qui comprennent un mélange de déchets organiques et inorganiques, comportant les étapes consistant à :
déposer les déchets bruts dans un digesteur de matière organique ;
traiter les déchets bruts dans le digesteur de matière organique pour convertir une fraction organique des déchets bruts en matière biocombustible solide qui est mélangée à une fraction de déchets inorganiques inertes des déchets bruts ;
décharger les déchets traités du digesteur de matière organique et déposer lesdits déchets traités dans un séparateur ;
séparer les déchets inorganiques inertes de la matière biocombustible solide dans le séparateur et décharger séparément du séparateur les matières inorganiques et une matière biocombustible solide sensiblement homogène;
en aval du séparateur, faire passer la matière biocombustible solide homogène dans un sécheur pour réduire la teneur en humidité de la matière biocombustible solide homogène ;
après le séchage, soumettre la matière biocombustible solide homogène à un traitement thermique pour extraire un gaz combustible de ladite matière biocombustible solide homogène, le procédé comprenant le chauffage de la matière biocombustible solide homogène dans une atmosphère à teneur en oxygène réduite pour extraire le gaz combustible de la matière biocombustible solide homogène.

2. Procédé conforme à la revendication 1, où le procédé comprend l'étape consistant à faire recirculer dans le sécheur la chaleur produite au cours du traitement thermique de la matière biocombustible solide homogène pour sécher la matière biocombustible solide homogène avant le traitement thermique de la matière biocombustible solide homogène.

3. Procédé conforme à une quelconque des revendications précédentes, où le procédé comprend l'utilisation du gaz combustible pour produire de l'énergie dans un moteur à gaz.

4. Procédé conforme à la revendication 1 ou 2, où le procédé comprend l'étape consistant à liquéfier le gaz combustible pour produire un biocombustible liquide.

5. Procédé conforme à une quelconque des revendications précédentes, où le procédé comprend l'étape consistant à tamiser la matière biocombustible solide pour en extraire toutes les particules de taille supérieure à 25 mm.

6. Procédé conforme à une quelconque des revendications précédentes, où le procédé comprend l'étape consistant à amener le gaz d'échappement déchargé du moteur à gaz dans un générateur de vapeur pour produire de la vapeur, et amener la vapeur dans une turbine à vapeur pour entraîner la turbine à vapeur, la turbine à vapeur entraînant un générateur d'électricité pour produire de l'énergie électrique.

7. Procédé conforme à une quelconque des revendications précédentes, où le procédé comprend l'étape consistant à nettoyer le gaz combustible.

8. Procédé conforme à une quelconque des revendications précédentes, où le procédé comprend l'étape consistant à collecter le condensat au cours de la production de gaz combustible et faire passer le condensat par une installation de traitement pour en éliminer les impuretés.

9. Système destiné à extraire de l'énergie renouvelable à partir de déchets tels que les résidus urbains solides et autres du même genre, comprenant :
un digesteur de matière organique doté d'une admission pour charger les déchets dans le digesteur et une sortie pour la matière traitée, ledit digesteur servant à convertir une fraction organique des déchets déposés dans le digesteur en matière biocombustible solide ;
un séparateur doté d'un moyen pour séparer la matière biocombustible solide d'une fraction inorganique inerte de la matière traitée déchargée du digesteur ;
un sécheur pour sécher la matière biocombustible solide déchargée du séparateur ;
un appareil de traitement thermique doté d'un moyen pour traiter thermiquement la matière biocombustible solide afm de produire un gaz combustible à partir de ladite matière biocombustible solide ; et
l'appareil de traitement thermique étant doté d'un moyen de chauffer la matière biocombustible solide dans une atmosphère à teneur en oxygène réduite pour extraire le gaz combustible de la matière biocombustible solide.

10. Système conforme à la revendication 9, où un moyen est prévu pour faire recirculer à travers le sécheur la chaleur produite dans l'appareil de traitement thermique afin de sécher la matière biocombustible solide.

11. Système conforme à la revendication 9 ou 10, où l'appareil comprend également un moteur à gaz et un moyen d'alimenter en gaz combustible ledit moteur à gaz, le moteur à gaz étant relié en entraînement à un groupe électrogène, un générateur de vapeur et un moyen d'amener les gaz d'échappement du moteur à gaz à travers le générateur de vapeur, une turbine à vapeur reliée au générateur de vapeur pour en recevoir de la vapeur afin d'entraîner la turbine à vapeur, la turbine à vapeur étant reliée en entraînement à un générateur d'électricité.

12. Système conforme à une quelconque des revendications 9 à 11, où le système comprend un nettoyeur pour nettoyer le gaz combustible produit dans l'appareil de traitement thermique.

13. Système conforme à une quelconque des revendications 9 à 12, où le système comprend un moyen pour liquéfier le gaz combustible afin de produire un biocombustible liquide.
